# EUROPEAN PATENT SPECIFICATION

(11) **EP 0 349 312 B1**
(45) Date of publication and mention of the grant of the patent: **26.10.1994**
(21) Application number: 89306597.9
(22) Date of filing: 29.06.1989
(51) Int. Cl.: G02B 6/44

(54) **Polymer clad quartz optical fiber cord**
Aus Quarz bestehendes Faserkabel mit Polymerbedeckung
Câble à fibre optique en quartz avec revêtement polymère

(30) Priority: 01.07.1988 JP 165686/88
(43) Date of publication of application: 03.01.1990
(73) Proprietor: TORAY INDUSTRIES, INC., Tokyo 103 (JP)
(72) Inventor: Kunieda, Hidekazu A2-16, Minami-cho 16, Kyoto-shi Kyoto-fu, 607 (JP); Takeuchi, Masanori, Otsu-shi Shiga-ken, 520 (JP)
(74) Representative: Coleiro, Raymond

(56) References cited:
- GB-A- 2 105 865
- US-A- 4 331 378

## Description

This invention relates to a polymer clad quartz optical fiber cord with an organic polymer as a clad. More specifically, it relates to a polymer clad quartz optical fiber cord which has improved light transmittance at low temperature.

A polymer clad quartz optical fiber has better light transmittance than a polymer core optical fiber. Further, it has a clad composed of an organic polymer and thus has better handling performance than glass clad optical fibers including better flexibility, allowing fabrication in larger diameters, and is therefore suitable for short or medium distance communications under severe environmental conditions as in factories.

A polymer clad quartz optical fiber is known in which the fiber core comprises quartz glass and the clad comprises a silicone resin.

However, for practical application, it is required to provide a cord structure with a covering layer disposed over the polymer clad quartz optical fiber in order to protect the clad quartz optical fiber from external excitation. It is known, for this reason, to cover a cord having a polymer clad quartz optical fiber by a thermoplastic resin such as nylon resin.

Furthermore, tension fibers running generally longitudinally of the cord and disposed circumferentially around the core may be included so as to receive any undue strain and protect the optical fibres therefrom (see GB-A-2 105 865).

However, conventional polymer clad quartz optical fiber cords have had the shortcoming that, as the core was of quartz glass while the clad and the protective or covering layer was formed of an organic polymer, these components had greatly different coefficients of thermal expansion. In a lower temperature region the organic polymer would shrink and the shrinking stress would apply a strain to the quartz to reduce the light transmittance of the optical fiber.

This shortcoming was particularly noticeable in a cord having a thermoplastic resin covering layer employed for the sake of ease of control of covering thickness as compared with a cord having a thermosetting resin covering layer. When such a cord structure was employed, the transmission loss at low temperature would increase more than that of the polymer clad quartz optical fiber comprised of only core and clad, precluding use of the thermoplastic resin under severe temperature conditions.

To solve this problem, we considered enlarging the inner diameter of the covering layer. However simply doing this causes an inferior relationship between the tension fibers and the optical fibers because the tension fibers are then packed too loosely. Further, the optical fiber cord needs to easily be inserted in and connected with a connector, so its outer diameter must be determined relative to the inner diameter of the connector. Therefore, enlarging the inner diameter of the covering layer inevitably brings about too small a thickness of the covering layer and causes insufficient protection by the covering layer.

US-A-4331378 discloses a polymer clad optical fiber cord having a core A, a sheath B for core A, an outer jacket D and, interspaced between sheath B and jacket D, a plurality of tension fibers. A protective layer is optionally present between the sheath and the tension fibers. The tension fibers sit within a void space between the sheath (or protective layer) and the jacket.

The present invention provides a prototype clad quartz optical fiber cord which enables the abovementioned disadvantages to be minimised or overcome.

In particular, the invention provides a polymer clad quartz optical fiber cord comprising a core comprising quartz glass, a clad comprising an organic polymer surrounding the said core, a protective layer surrounding the said clad, a covering layer surrounding the said protective layer and one or more tension fibers which may define a tension fiber layer, and the or each of which tension fibers comprises an organic polymeric fiber disposed between the protective layer and the covering layer, the cross-sectional structure of the cord satisfying the following formula (I)$\text{4 ≦ α ≦ 40,}$ 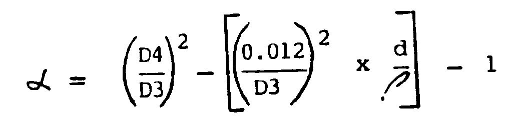
where D3 represents the outer diameter (in mm) of the protective layer, D4 the inner diameter (in mm) of the covering layer d the denier of the tension fiber, in denier (g/9000m), and is an integer of from 1000 to 5000 inclusive and ρ is the density (in g/cm³) of the tension fiber.

In the above formula, a designates the ratio of the cross-sectional area that is unoccupied by fiber(s), which may comprise the tension fiber layer between the protective layer and the covering layer and the cross-sectional area of the protected optical fiber; in other words including the cross-sectional area of the core, clad and protective layer.

Usually, each of the protective and covering layers are disposed concentrically around the core.

In a polymer clad quartz optical fiber cord in accordance with the invention, the cross-sectional structure of the cord satisfies the formula$\text{4 ≦ α ≦ 40,}$
and preferably the formula$\text{4.5 ≦ α ≦ 10.}$

A particularly preferred optical fiber cord has a core diameter of from 150 - 250 microns inclusive and has a cross-sectional structure which satisfies the formula$\text{4 ≦ α ≦ 10.}$

By using an especially preferred polymer clad quartz optical fiber cord embodying the invention, disadvantages of known optical fiber cords which can be minimised or overcome are, in particular, that
1) an increase of transmission loss of the polymer clad quartz optical fiber cord at lower temperatures can be avoided, and
2) the cord may be provided with a sufficient resisting force to drawing in wiring work so as to be distinguished in handling performance and workability, keeping its outer diameter at a known uniform and desired dimension so that it can be easily connected with an ordinary connector.

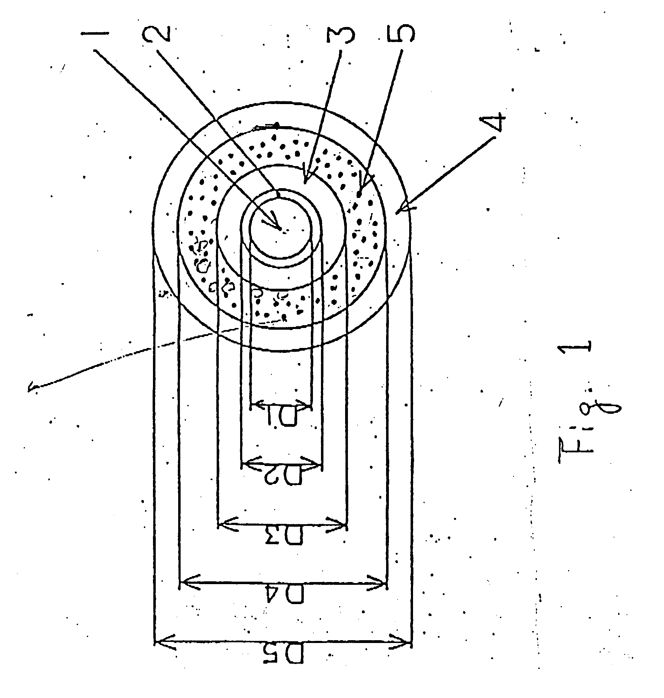

The foregoing and other advantages of this invention, including its simplicity and economy and the ease with which it may be applied to cords of different sizes, shapes and combinations, will become even more apparent hereinafter from the following detailed description with reference to the accompanying drawings in which the sole Figure 1 is a cross-sectional view of a polymer clad quartz optical fiber cord comprising one embodiment according to this invention.

In Fig. 1, a core of quartz glass (having an outer diameter of, for example, 200 microns) has a clad 2 concentrically disposed thereover to form an optical fiber. This clad 2 is of a transparent organic polymer having a refractive index smaller than that of the quartz in the core 1 by 0.3 percent or more. Specifically, the clad 2 may comprise a polymer cured by ultraviolet radiation such as a fluorine containing polymer, for example an ultraviolet ray hardening fluorine containing acrylate polymer, but is not limited thereto.

Over the clad 2, a protective layer 3 (having, for example, an outer diameter of 0.5mm) is concentrically disposed around the clad 2. This protective layer 3 is designed to protect the core 1 from light transmittance and the clad 2 from external dynamic excitation and contamination, and is preferably distinguished in its mechanical characteristics.

It is preferable that the protective layer 3 has a tensile modulus of 500kg/mm² or higher. Specifically, nylons and tetrafluoroethylene copolymers are preferably used.

The outer diameter of the protective layer 3 is preferably 1.4 times or more but 2.5 times or less than the core diameter. If its diameter is less than 1.4 times, the thickness is not sufficient to serve as a protective layer and protect the polymer clad quartz optical fiber from external excitation. If its diameter exceeds 2.5 times, the thickness becomes too great, resulting in less flexibility and greater shrinkage stress of the protective layer under low temperature, thus increasing the transmission loss of the polymer clad quartz optical fiber. It is, therefore, preferable that the cord dimensions satisfy formula$\text{1.4 ≦ β ≦ 2.5}$
where β = D3/D1
and where D3 represents the outer diameter (in mm) of the protective layer (3), and D1 represents the outer diameter (in mm) of the core (1).

Further, over the protective layer (3), a covering layer (4), which may be a thermoplastic resin, is disposed concentrically with the protective layer. Also, between the outer periphery of the covering layer (3) and the inner periphery of the covering layer (4), a tension fiber layer (5), in which the fibers are organic polymer fibers, is disposed. Here, it is necessary that the dimensions of these layers satisfy the formula (I) below.$\text{4 ≦ α ≦ 40}$
where 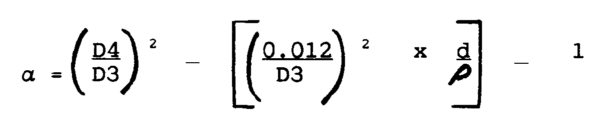
and that γ be not smaller than 1.5

Moreover, the following equation (III) may apply$\text{1.5 < γ < 1.8}$
where γ = D5/D4.

In the above formulae, D3 represents the outer diameter (in mm) of the protective layer, D4 represents the inner diameter (in mm) of the covering layer, D5 represents the outer diameter (in mm) of the covering layer, and d is the total denier of the tension fibers, in denier (g/9000m), and is an integer of from 1000 to 5000 inclusive, and ρ represents the relative density of the tension fibers.

Providing ρ is about 1.4 as is the case, for example, with the aramide fiber "Kevlar" (density 1.44 g/cm³), the above formula (I) can be abbreviated substantially to the following formula (I′).$\text{4 ≦ α′ ≦ 40}$
where

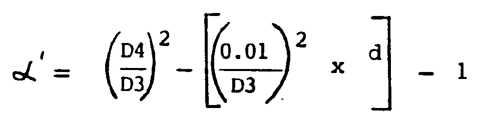

In this formula (I′), α′ has the same meaning as in formula (I), but relates only to a cord in which the space between the protective and covering layers is occupied by tension fibre having a density of about 1.4.

In the formula (I) or (I′), if α or α′ is smaller than 4 this means that the clearance between the protective layer (3) and the covering layer (4) is too small so that the stress of shrinkage of the covering layer (4) at low temperature is imposed upon the protective layer (3) to cause a strain in the core and thus increases the transmission loss of the polymer clad quartz optical fiber. If α or α′ is too great, the polymer clad quartz optical fiber (1) is easily broken before the breakage of the tension fibers (5) because the protective layer (3) is apt to move freely under the covering layer (4) so that the effect of protecting the polymer clad quartz optical fiber (1) by the tension fibers (5) is not ensured. In other words, the beneficial effect of the tension fibers (5) is wholly or partially lost, resulting in breakage of the polymer clad optical fiber at the time of drawing while performing wiring work. In particular, for a polymer clad quartz optical fiber having an outer diamter of 150 to 250 microns, α or α′ should preferably be 4 to 10.

In formula (III), if γ is smaller than 1.5, the protective effect of the covering layer is not fully exhibited, and if γ is greater than 1.8, the polymer clad quartz optical fiber cord has its weight unduly increased, resulting in poor economy. In addition, the stress of shrinkage at low temperatures exerts an influence on the protective layer (3) to apply a strain to the core and thus to increase the transmission loss of the polymer clad quartz optical fiber.

For a polymer clad quartz optical fiber cord having dimensions which satisfy the above formula (I′), the equation$\text{4 ≦ α′ ≦ 40,}$
and preferably the equation$\text{4.5 ≦ α′ ≦ 10}$
is also satisfied.

A particularly preferred such optical fiber cord has a core diameter of from 150 - 250 microns inclusive and has a cross-sectional structure which satisfies the formula$\text{4 ≦ α′ ≦ 10.}$

Regarding the composition of the covering layer (4), at least one polymer selected from polyurethane, polyester elastomer, poly(vinyl chloride), polyethylene and polypropylene may be chosen, among others, and the tension fiber is preferably an organic polymer fiber having a tensile modulus of at least 5000kg/mm² or more. Among such polymer fibers there may be listed polyaramid, polyamide, polyimide, polyester, high strength polyethylene, carbon fibers, high strength polyacrylonitrile and high strength poly (vinyl alcohol).

By means of a polymer clad quartz optical fiber cord embodying the present invention, the following effects may be provided.
(1) The cord has distinguished performance for light transmittance at low temperature.
(2) It has strength against tension and is resistant to damage even after drawing in wiring work.
(3) It has a protective layer which is of a great elastic modulus and is therefore economical in that the thickness of the protective layer can be reduced.
(4) On account of the protective layer of great elastic modulus, the effect of protecting the fiber is enhanced, allowing a greater degree of freedom of design of the covering layer.
(5) As the thickness of the covering layer can be reduced the cord is lightweight and economical.

The present invention will now be described in more detail with reference to specific examples.

### EXAMPLE 1

Using an aramid fiber having a tensile modulus of 13000 kg/mm² as the tension fiber, a polymer clad quartz optical fiber cord was fabricated with poly (vinyl chloride) used for the covering layer. The polymer clad quartz optical fiber employed was a core of pure quartz of 200 µm diameter, a clad of UV-curable fluorinated polyacrylate of a clad thickness of 15µ and a clad diameter of 230 µm disposed over the core, and a tetrafluoroethylene-ethylene copolymer having a tensile modulus of 1000kg/mm² and having an outer diameter of 0.5mm positioned to serve as a protective layer. Over this polymer clad quartz optical fiber, five strands of a tension fiber, which were of 380 denier aramid fiber, were disposed in such a way as to encircle the polymer clad quartz optical fiber, and they were covered by a covering layer of poly(vinyl chloride) of an outer diameter of 2.2 mm and an inner diameter of 1.34mm. Under such configuration, the value of α in formula (I) expressing the cross-sectional structure of the cord was 5.42.

Also, the value of β in formula (II) and that of γ in formula (III) were 2.5 and 1.6 respectively.

The polymer clad quartz optical fiber was disposed at the center of the concentrically formed cord and was not in direct contact with the covering layer, and the poly(vinyl chloride) covering had a smooth surface. The transmission loss at 25°C was 4dB/km, which was the same as that of the polymer clad quartz optical fiber before it was fabricated into the cord. Placing 1km of this cord in a thermostat, and using an LED light source and a light power meter, the quantities of light transmission after treatment at 25°C for 8 hours and at -40°C for 8 hours were determined, and it was found that the change of the quantity of light transmission between 25°C and -40°C was very slight, giving an increase of only 1.0 dB/km of transmission loss based on the amount of light transmission at 25°C. Thus, the cord was proved to have excellent low temperature performance for light communication.

### REFERENCE EXAMPLE 1

Using a polymer clad quartz optical fiber similar to that in Example 1, an aramid fiber was disposed over the same optical fiber, and this aramid fiber was covered with poly(vinyl chloride) to fabricate a cord having an outer diameter of 2.2mm and an inner diameter of 1.0mm for optical communication. The value of α expressing the cross-sectional configuration of the cord was 2.22, and the value of β in formula (II) and that of γ in formula (III) were 2.5 and 2.2 respectively.

The cord was subjected to a temperature test as in Example 1, and the quantity of light was proved to have changed greatly by 7.0 dB/km with reference to the value at 25°C, and the product was found to be inadequate for use as a cord for optical communication.

### Examples 2-4, Reference Examples 2,3 and 6

Example 1 was repeated using different values for the inner diameter of the covering layer and the thickness of the tension fiber. The values used are summarized in Table 1. The results of temperature tests and impact breaking tests by dropping the cords obtained are also shown in Table 1.

### Example 6 and Reference Example 4

Example 1 was repeated except that the polymer clad quartz optical fiber was replaced by one having a core diameter of 110 microns and a protective layer diameter of 250 microns. The results are also shown in Table 1.

### Example 7 and Reference Example 5

Example 1 was repeated except that the polymer clad quartz optical fiber was replaced by one having a core diameter of 300 microns and a protective layer diameter of 500 microns. The results are also shown in Table 1.

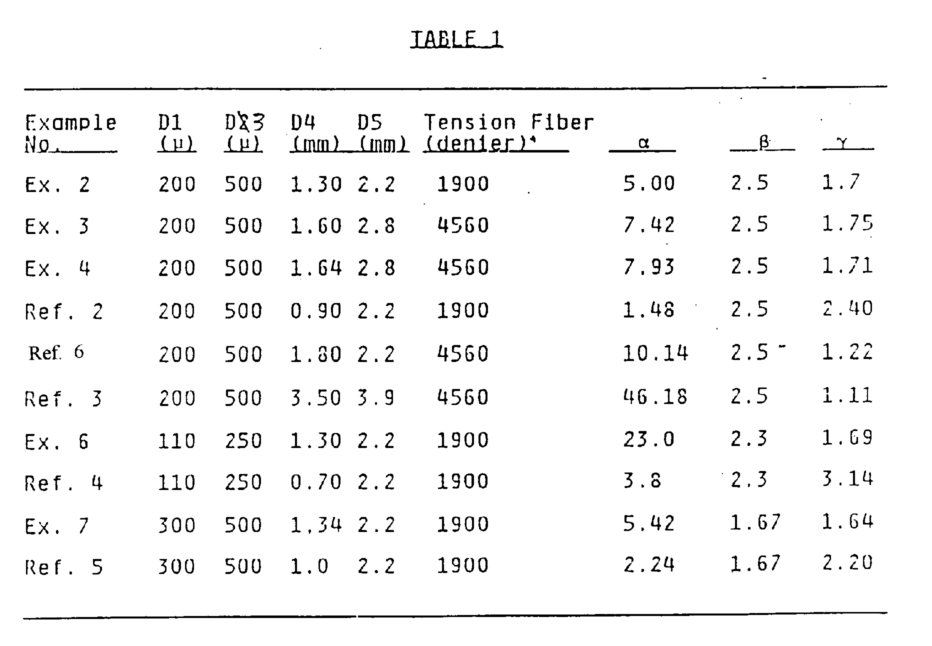

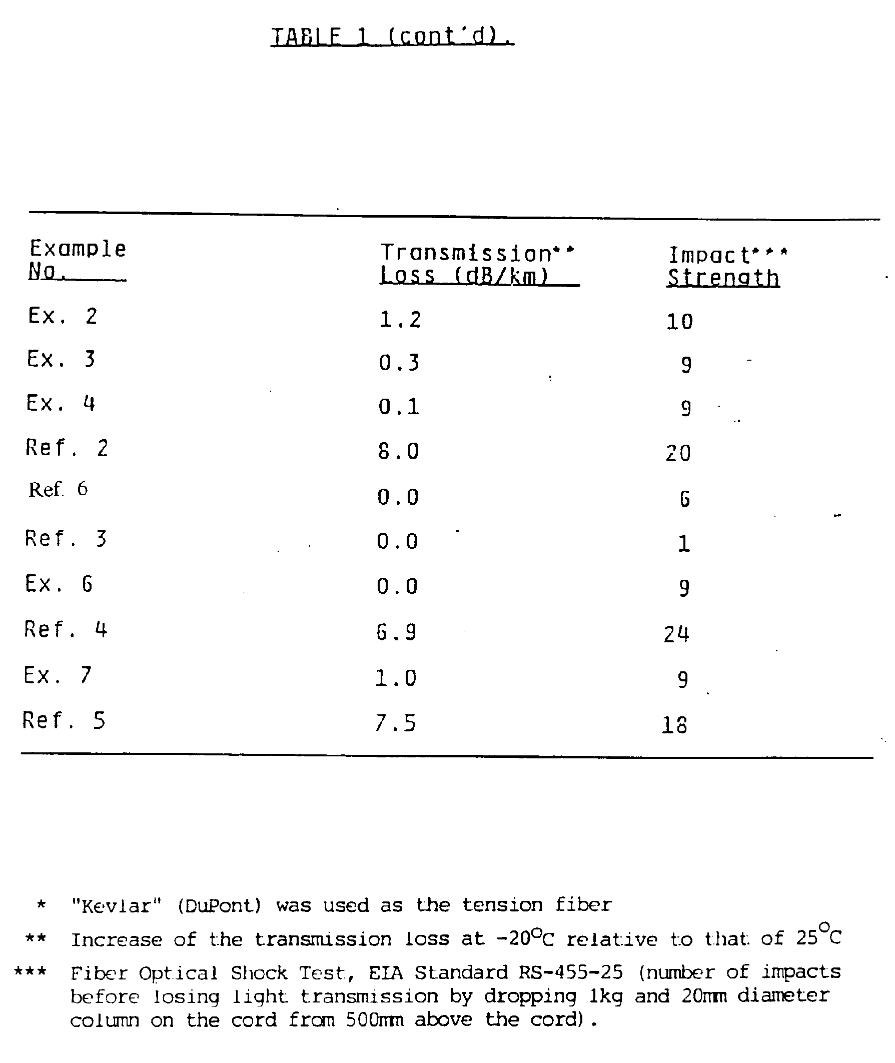

Although considerable emphasis has been placed upon aramid fibers such as "Kevlar" in the foregoing description, the invention applies with full effect to other high strength fibers such as carbon fibers, high strength polyethylene fibers, high strength polyvinyl alcohol fibers high strength acrylonitrile fibers.

Although this invention has been described with respect to specific layers and materials combined in particular sequences in the interest of clarity of understanding, it will be understood and appreciated that equivalent layers, materials and sequences may be used, some with reversals of order.

## Claims

1. A polymer clad quartz optical fiber cord comprising a core (1) of quartz glass, a clad (2) of an organic polymer surrounding said core (1), a protective layer (3) surrounding said clad (2), a covering layer (4) surround said protective layer (3), and organic polymeric tension fiber (5) disposed between said protective layer (3) and said covering layer (4), characterised in that (a) the cross-sectional structure of said cord satisfies the following formula:$\text{4 ≦ α ≦ 40,}$ where 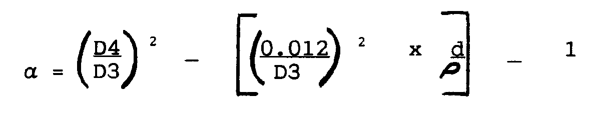 and where D3 represents the outer diameter (in mm) of said protective layer (3), D4 represents the inner diameter (in mm) of the covering layer (4), d represents the total denier (in g/9000m) of the tension fiber (5) and is an integer of from 1000 to 5000 inclusive, and ρ represents the density (g/cm³) of the tension fibers (5); and (b) the ratio γ, of the inner diameter to the outer diameter of the covering layer (4), is not smaller than 1.5,
where γ = D5/D4, D4 is as defined above and D5 represents the outer diameter (in mm) of the covering layer (4).

2. A polymer clad quartz optical fiber cord according to claim 1, wherein the cross-sectional structure of said cord satisfies the formula:$\text{4.5 ≦ α ≦ 10.}$

3. A polymer clad quartz optical fiber cord according to claim 1, wherein the diameter of the core (1) is from 150-250 microns inclusive and the cross-sectional structure of said cord satisfies the formula:$\text{4 ≦ α ≦ 10.}$

4. A polymer clad quartz optical fiber cord according to any preceding claim, wherein the organic tension fibre (5) is provided by d tension fiber layer comprised of aramid fiber and the cross-sectional structure of said cord satisfies the following formula (I′)$\text{4 ≦ α′ ≦ 40}$ where 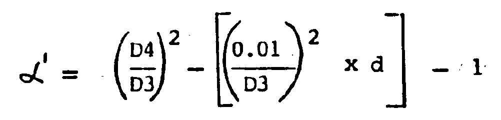 and where D3, D4 and d are as defined in claim 1.

5. A polymer clad quartz optical fiber cord according to claim 4, wherein the cross-sectional structure of said cord satisfies the following formula$\text{4.5 ≦ α′ ≦ 10.}$

6. A polymer clad quartz optical fiber cord according to claim 4, wherein the diameter of the core (1) is from 150-250 microns inclusive and the cross-sectional structure of said cord satisfies the following formula$\text{4 ≦ α′ ≦ 10.}$

7. A polymer clad quartz optical fiber cord according to any one of claims 1, 2 and 4 to 6, wherein the diameter of the core (1) is from 100-300 microns inclusive.

8. A polymer clad quartz optical fiber cord according to any preceding claim, wherein the clad (2) comprises a polymer cured by ultra violet radiation.

9. A polymer clad quartz optical fiber cord according to any preceding claim, wherein the protective layer (3) comprises an organic polymer having a tensile modulus of at least 500 kg.mm².

10. A polymer clad quartz optical fiber cord according to any preceding claim, wherein the covering layer (4) comprises a thermoplastic resin.

11. A polymer clad quartz optical fiber cord according to any preceding claim, wherein the tension fiber (5) has a tensile modulus of at least 5000 kg/mm².

12. A polymer clad quartz optical fiber cord according to any preceding claim, wherein the ratio, β, of the outer diameter of the protective layer (3) to the outer diameter of the core (1) comprised of quartz glass satisfies the following formula (II)$\text{1.4 ≦ β ≦ 2.5}$ where β = D3/D1
and wherein D3 represents the outer diameter (in mm) of the protective layer (3) and D1 the outer diameter (in mm) of the core (1).

13. A polymer clad quartz optical fiber core according to any preceding claim, wherein γ is not greater than 1.8.

## Patentansprüche

1. Optisches Quarzfaserkabel mit Polymerummantelung, umfassend einen Kern (1) aus Quarzglas, eine Ummantelung (2) aus einem organischen Polymer um den genannten Kern (1), eine Schutzschicht (3) um die genannte Ummantelung (2), eine Abdeckschicht (4) um die genannte Schutzschicht (3) und eine Zugfaser (5) aus organischem Polymer zwischen der genannten Schutzschicht (3) und der genannten Abdeckschicht (4), dadurch gekennzeichnet, daß (a) die Querschnittsstruktur des genannten Kabels die folgende Formel:$\text{4 ≦ α ≦ 40,}$ erfüllt, worin 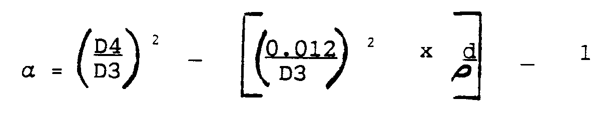 und worin D3 den Außendurchmesser (in mm) der genannten Schutzschicht (3) darstellt, D4 den Innendurchmesser (in mm) der genannten Abdeckschicht (4) darstellt, d den Gesamtdenier (in g/9000m) der Zugfaser (5) darstellt und eine ganze Zahl von 1000 bis einschließlich 5000 ist und ρ die Dichte (g/cm³) der Zugfasern (5) darstellt; und daß (b) das Verhältnis γ des Innendurchmessers zum Außendurchmesser der Abdeckschicht (4) nicht kleiner als 1,5 ist,
worin γ = D5/D4 wie oben definiert ist und D5 den Außendurchmesser (in mm) der Abdeckschicht (4) darstellt.

2. Optisches Quarzfaserkabel mit Polymerummantelung nach Anspruch 1, worin die Querschnittsstruktur des genannten Kabels die Formel:$\text{4,5 ≦ α ≦ 10}$ erfüllt.

3. Optisches Quarzfaserkabel mit Polymerummantelung nach Anspruch 1, worin der Durchmesser des Kerns (1) 150 bis einschließlich 250 µm beträgt und die Querschnittsstruktur des genannten Kabels die Formel:$\text{4 ≦ α ≦ 10}$ erfüllt.

4. Optisches Quarzfaserkabel mit Polymerummantelung nach einem der vorhergehenden Ansprüche, worin die organische Zugfaser (5) durch eine Zugfaserschicht aus Aramidfaser gebildet wird und die Querschnittstruktur des genannten Kabels die folgende Formel:$\text{4 ≦ α′ ≦ 40}$ erfüllt, worin 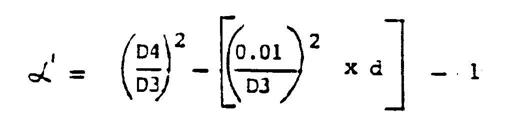 und worin D3, D4 und d so wie in Anspruch 1 definiert sind.

5. Optisches Quarzfaserkabel mit Polymerummantelung nach Anspruch 4, worin die Querschnittsstruktur des genannten Kabels die folgende Formel:$\text{4,5 ≦ α′ ≦ 10}$ erfüllt.

6. Optisches Quarzfaserkabel mit Polymerummantelung nach Anspruch 4, worin der Durchmesser des Kerns (1) 150 bis einschließlich 250 µm beträgt und die Querschnittsstruktur des genannten Kabels die folgende Formel:$\text{4 ≦ α′ ≦ 10}$ erfüllt.

7. Optisches Quarzfaserkabel mit Polymerummantelung nach einem der Ansprüche 1, 2 und 4 bis 6, worin der Durchmesser des Kerns (1) zwischen 100 und einschließlich 300 µm liegt.

8. Optisches Quarzfaserkabel mit Polymerummantelung nach einem der vorhergehenden Ansprüche, worin die Ummantelung (2) ein durch Ultraviolett-Strahlung gehärtetes Polymer umfaßt.

9. Optisches Quarzfaserkabel mit Polymerummantelung nach einem der vorhergehenden Ansprüche, worin die Schutzschicht (3) ein organisches Polymer umfaßt, das einen Zugmodul von zumindest 500 kg.mm² aufweist.

10. Optisches Quarzfaserkabel mit Polymerummantelung nach einem der vorhergehenden Ansprüche, worin die Abdeckschicht (4) ein thermoplastisches Harz umfaßt.

11. Optisches Quarzfaserkabel mit Polymerummantelung nach einem der vorhergehenden Ansprüche, worin die Zugfaser (5) einen Zugmodul von zumindest 5000 kg/mm² aufweist.

12. Optisches Quarzfaserkabel mit Polymerummantelung nach einem der vorhergehenden Ansprüche, worin das Verhältnis β des Außendurchmessers der Schutzschicht (3) zum Außendurchmesser der Kerns (1) aus Quarzglas die folgende Formel (II):$\text{1,4 ≦ β ≦ 2,5}$ erfüllt, worin β = D3/D1
und worin D3 den Außendurchmesser (in mm) der Schutzschicht (3) und D1 den Außendurchmesser (in mm) des Kerns(1) darstellt.

13. Optisches Quarzfaserkabel mit Polymerummantelung nach einem der vorhergehenden Ansprüche, worin γ nicht größer als 1,8 ist.

## Revendications

1. Câble à fibre optique en quartz plaqué d'un polymère comprenant une âme (1) en verre de quartz, un placage (2) d'un polymère organique entourant ladite âme (1), une couche protectrice (3) entourant ledit placage (2), une couche de recouvrement (4) entourant ladite couche protectrice (3), et une fibre de tension (5) en un polymère organique ,disposée entre ladite couche protectrice (3) et ladite couche de recouvrement (4), caractérisé en ce que (a) la structure en section transversale dudit câble satisfait à la formule suivante :$\text{4 ≦ α ≦ 40,}$ où 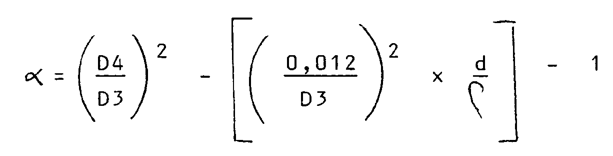 et où D3 représente le diamètre externe (en mm) de ladite couche protectrice (3), 04 représente le diamètre interne (en mm) de la couche de recouvrement (4), d représente le denier total (en g/9 000 m) de la fibre de tension (5) et est un nombre entier de 1 000 à 5 000 inclus et ρ représente la densité (g/cm³) des fibres de tension (5); et (b) le rapport γ du diamètre interne au diamètre externe de la couche de recouvrement (4) n'est pas plus petit que 1,5,
où γ =D5/D4, D4 est tel que défini ci-dessus et D5 représente le diamètre externe (en mm) de la couche de recouvrement (4).

2. Câble à fibre optique en quartz plaqué d'un polymère selon la revendication 1 où la structure en section transversale dudit câble satisfait à la formule$\text{4,5 ≦ α ≦ 10.}$

3. Câble à fibre optique en quartz plaqué d'un polymère selon la revendication 1, où le diamètre de l'âme (1) est compris entre 150 et 250 microns inclus et la structure en section transversale dudit câble satisfait à la formule :$\text{4 ≦ α ≦ 10.}$

4. Câble à fibre optique en quartz plaqué d'un polymère selon toute revendication précédente, où la fibre de tension organique (5) est formée d'une couche d'une fibre de tension composée d'une fibre aramid et la structure en section transversale dudit câble satisfait à la formule (I′) qui suit$\text{4 ≦ α′ ≦ 40}$ où 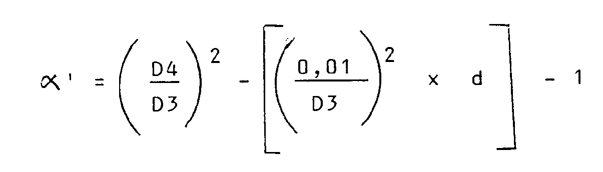 où D3, D4 et d sont tels que définis à la revendication 1.

5. Câble à fibre optique en quartz plaqué d'un polymère selon la revendication 4, où la structure en section transversale dudit câble satisfait à la formule suivante$\text{4,5 ≦ α′ ≦ +10.}$

6. Câble à fibre optique en quartz plaqué d'un polymère selon la revendication 4, où le diamètre de l'âme (1) est compris entre 150 et 250 microns inclus et la structure en section transversale dudit câble satisfait à la formule suivante$\text{4 ≦ α′ ≦ 10.}$

7. Câble à fibre optique en quartz plaqué d'un polymère selon l'une quelconque des revendications 1, 2 et 4 à 6, où le diamètre de l'âme (1) est compris entre 100 et 300 microns inclus.

8. Câble à fibre optique en quartz plaqué d'un polymère selon toute revendication précédente, où le placage se compose d'un polymère durci par un rayonnement ultraviolet.

9. Câble à fibre optique en quartz plaqué d'un polymère selon toute revendication précédente, où la couche protectrice (3) se compose d'un polymère organique ayant un module de traction d'au moins 500 kg.mm².

10. Câble à fibre optique en quartz plaqué d'un polymère selon toute revendication précédente, où la couche de recouvrement (4) se compose d'une résine thermoplastique.

11. Câble à fibre optique en quartz plaqué d'un polymère selon toute revendication précédente, où la fibre de tension (5) a un module de traction d'au moins 5 000 kg/mm².

12. Câble à fibre optique en quartz plaqué d'un polymère selon toute revendication précédente, où le rapport β du diamètre externe de la couche protectrice (3) au diamètre externe de l'âme (1) composée de verre au quartz satisfait à la formule (II) qui suit$\text{1,4 ≦ β ≦ 2,5}$ où β = D3/D1
et où D3 représente le diamètre externe (en mm) de la couche protectrice (3) et D1 le diamètre externe (en mm) de l'âme (1).

13. Ame de fibre optique en quartz plaqué d'un polymère selon toute revendication précédente, où γ est plus grand que 1,8.
